# EUROPEAN PATENT APPLICATION

(11) **EP 2 372 574 A1**
(43) Date of publication of application: **05.10.2011**
(21) Application number: 10250475.0
(22) Date of filing: 15.03.2010
(51) Int. Cl.: G06F 17/30

(54) **File storage synchronisation system and components thereof**

(71) Applicant: Syncmy Limited, Berks, SL4 4TL (GB)
(72) Inventor: Timson, Anthony, Berks, SL4 4TL (GB); Michaels, Wayne, Berks, SL4 4TL (GB)
(74) Representative: Brinck, David John Borchardt

(57) **Abstract**

There is described a file synchronisation system in which files are automatically transferred files to a first network device from a second network device. The file synchronisation system utilises a networked gateway device to control the transfer of data between the first and second network devices. When the first and second networked devices are logged onto the remote networked gateway device, the networked gateway device sends a network signal authorising the first network device to commence a file synchronisation. The first network device sends a network signal to the second network device requesting details of files stored by the second network device, and the second network device sends a network signal to the first network device providing details of files stored by the second network device. The first network device compares the details of files stored by the second network device with details of files stored by the first network device, and selects files for transferring from the second network device to the first network device. The first network device then requests said selected files from the second network device, and the second network device sends said selected files to the first network device.

## Description

This invention relates to a system for, and a method of, synchronising file storage by two or more different devices. The invention has particular, but not exclusive, relevance when one or more of the devices is a mobile device. The invention also extends to components of the file storage system and methods of operation of such components.

It has become increasingly commonplace for a person to have several different computing devices on which files are stored. For example, a person may have a desktop computer at home, a laptop computer for travel and a back-up memory storage device. Further, the same person is likely to have a cellular phone for a Public Land Mobile Network, and nowadays such cellular phones often have file storage facilities, e.g. for storing media files such as image files and sound files.

Various systems are already available which enable synchronisation of files stored by different devices. In this way, for example, files added to, or modified on, a desktop computer are transferred to a laptop computer owned by the same person so that the owner can access the latest versions of those files. Known file synchronisation systems can generally be characterised into two types, namely:
(i) file synchronisation systems requiring a local connection, either wired (e.g. using a USB cable) or wireless (e.g. using a Bluetooth interface), to be established between two devices allowing files to be directly transferred between the two devices; and
(ii) "cloud-based" systems in which an Internet device stores the files of the user, and the user is able to download files of interest from the Internet device.

The known file synchronisation systems suffer from one or more of the following problems:
- some form of user intervention is required to initiate file synchronisation;
- for "cloud-based systems", some form of central online storage device is required "in the cloud", which both introduces additional cost and increases the vulnerability of the information to hacking or other unauthorised access or dissemination;
- for systems other than "cloud-based systems", some form of local connection is required;
- the synchronisation is specific to a particular format of file; and
- the synchronisation processes are to some extent platform-dependent, preventing or making difficult the synchronisation of devices from different manufacturers.

Aspects of the present invention, as set out in the accompanying claims, address, one or more of the above problems.

According to an aspect of the invention, there is provided a network device operable to retrieve files from a remote network device, the network device comprising:
means for establishing a network connection to a remote networked gateway device;
means for receiving and processing a network signal from the remote networked gateway device providing authorisation to commence a file synchronisation;
means for generating and sending a network signal to the remote network device requesting details of files stored by the remote network device;
means for receiving from the remote network device the requested details of files stored by the remote network device;
means for comparing the details of the files stored by the remote network device with details of files already stored, and selecting files for transfer;
means for generating and sending a network signal requesting said selected files to the remote network device; and
means for receiving and storing the selected files.

According to another aspect of the invention, there is provided a network device operable to provide files to a remote network device, the network device comprising:
means for establishing a network connection to a remote networked gateway device;
means for receiving and processing a network signal from a remote network device requesting details of files stored by the remote network device;
means for generating and sending a network signal to the remote network device providing said requested details;
means for receiving one or more requests from the remote network device for file data; and
means for sending the file data requested in said one or more requests.

According to a further aspect of the invention there is provided a gateway device for controlling the transfer of files between a first network device and a second network device, the gateway device comprising:
means for establishing a network connection with the first network device;
means for establishing a network connection with the second network device; and
means for authorising one of the first and second network devices to commence a file synchronisation.

In an embodiment, the gateway device further comprises means for sending details to the first and second network devices for establishing a connection directly between the first and second devices. The gateway device may send one of the first and second network devices the network address of the other of the first and second network devices. The sent details may include an authentication code. The sent details may also include a port number.

In an embodiment, a first network device and a second network device log on to a remote networked gateway device which controls the transfer of files between the first and second network devices. In particular, the.networked gateway device sends a network signal authorising the first network device to commence a file synchronisation, in response to which the first network device sends a network signal to the second network device requesting details of files stored by the second network device. The second network device sends a network signal to the first network device providing details of files stored by the second network device, and the first network device compares the details of files stored by the second network device with details of files stored by the first network device, selects files for transferring from the second network device to the first network device, and sends details of the selected files to the second network device. Following receipt of the request, the second network device sends the selected files to the first network device. In this way, neither a local connection nor some sort of online central storage device is required. In the same manner, the first network device may additionally request files from further network devices, the invention being generally applicable to synchronising file storage between multiple devices. Further, as the file synchronisation process is initiated by the gateway device, no form of user intervention is required to initiate the file synchronisation process. In addition, the files need not have any particular format themselves.

Preferably, the first and second network devices automatically log on to the gateway device. In this way, no user intervention is required in the entire synchronisation process. For a battery-powered client device such as a cellular phone, for which increasing battery life is a significant consideration, the client device may periodically log onto the gateway device and then log off the gateway device. For devices which are not battery-powered, the client devices may be programmed to log onto the gateway device whenever the client device is switched on.

An embodiment of the present invention will now be described in detail with reference to the accompanying Figures in which:
Figure 1 schematically shows the main components of a file storage synchronisation system according to the present invention;
Figure 2 shows the main components of a gateway which forms part of the file storage synchronisation system illustrated in Figure 1;
Figure 3 shows the main components of a desktop computer forming a client device for the file storage synchronisation system illustrated in Figure 1;
Figure 4 shows the main components of a cellular phone forming a client device for the file storage synchronisation system illustrated in Figure 1;
Figure 5 shows the main components of a content provider server associated with the file storage synchronisation system illustrated in Figure 1;
Figures 6A and 6B show a flow chart illustrating the process performed when a client device logs onto the gateway;
Figure 7 shows a flow chart illustrating a file synchronisation process;
Figure 8 shows a flow chart showing in more detail the establishment of a connection between remote devices and synchronisation of files between the connected devices during the file synchronisation process illustrated in Figure 7;
Figure 9 schematically shows a direct connection between remote client devices for the file synchronisation process;
Figure 10 schematically shows a proxy connection between remote client devices for the file synchronisation process;
Figure 11 shows a flow chart illustrating the establishment of a direct connection between remote client devices as illustrated in Figure 9; and
Figure 12 shows a flow chart illustrating a file synchronisation process over a direct connection between client devices.

### SYSTEM OVERVIEW

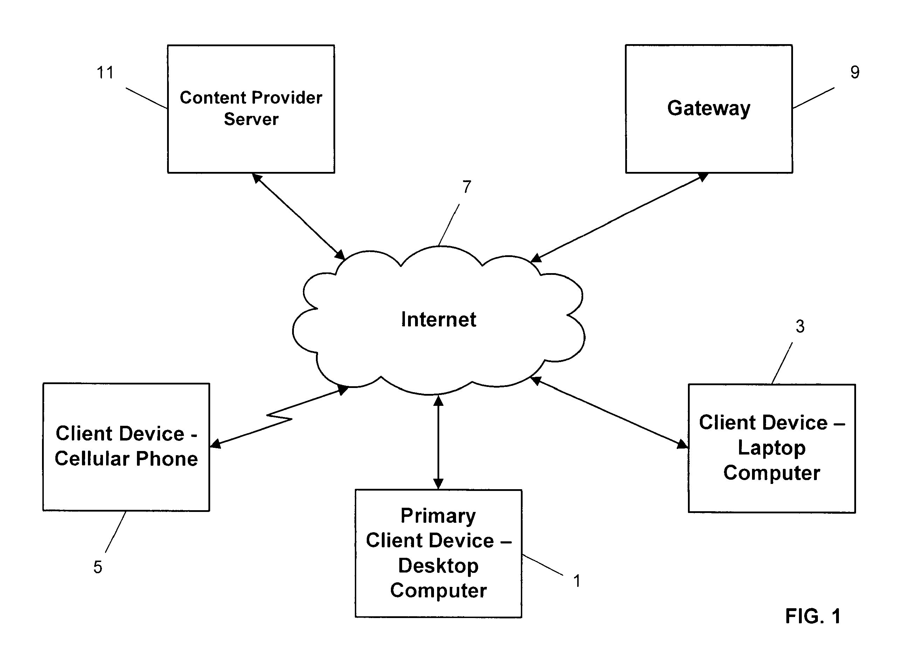

As shown in Figure 1, in an exemplary embodiment of the present invention, various client devices 1, 3, 5 are connected to an internet 7. In this specification, the term "internet" encompasses any system of interconnected networks such as conventional IP networks and Public Land Mobile Networks (PLMNs). In this embodiment, a primary client device is in the form of a desktop computer 1 and another client device is in the form of a laptop computer 3, whereas a further client device is in the form of a cellular phone 5. The primary client device 1 is connected directly to an IP network, for example a Local Area Network (LAN). The laptop computer 3 and the cellular phone 5 may be connected directly to an IP network, e.g. a wireless LAN, or may be indirectly connected to an IP network via a PLMN

A gateway 9 is also connected to the internet 7. As will be described in more detail hereafter, the gateway 9 is a novel programmed entity which during a file synchronisation process controls communication between the client devices 1, 3 and 5, each of which have novel application software (hereafter referred to as client software). An important feature of the present invention is that the gateway 9 does not itself store any of the files which are to be synchronised. Accordingly, there is no need for large file storage facilities away from the client devices "in the cloud".

In accordance with the present invention, during a file synchronisation process the gateway 9 authorises a first client device to retrieve a file manifest from a second client device. The retrieved manifest gives details of the files stored by the second manifest, including version information. The first client device compares the retrieved manifest with a stored manifest detailing the files stored by the first client device. If the first client device recognises that the second client device either stores a file which is not stored by the first client device or stores a version of a file which has been updated compared to a version of the same file stored in the first client device, then the first client device retrieves the new file or updated file from the second client device.

As will be described in more detail hereafter, in this embodiment the gateway 9 employs a number of control mechanisms which improve various aspects of the synchronisation process. These control mechanisms include rules concerning the order in which client devices synchronise with other client devices, and the communication mechanism which is employed to communicate between two client devices.

According to an aspect of the invention, the file synchronisation process can also be used to distribute content from a content provider server 11, which is also connected to the internet 7. For example, the content provider may be a news agency which provides a media file containing a short news report to the client every day. Using the file synchronisation process, the gateway 9 can instruct a client device to download the media file from the content provider server 11.

The various novel components associated with the present invention will now be described in more detail.

### GATEWAY

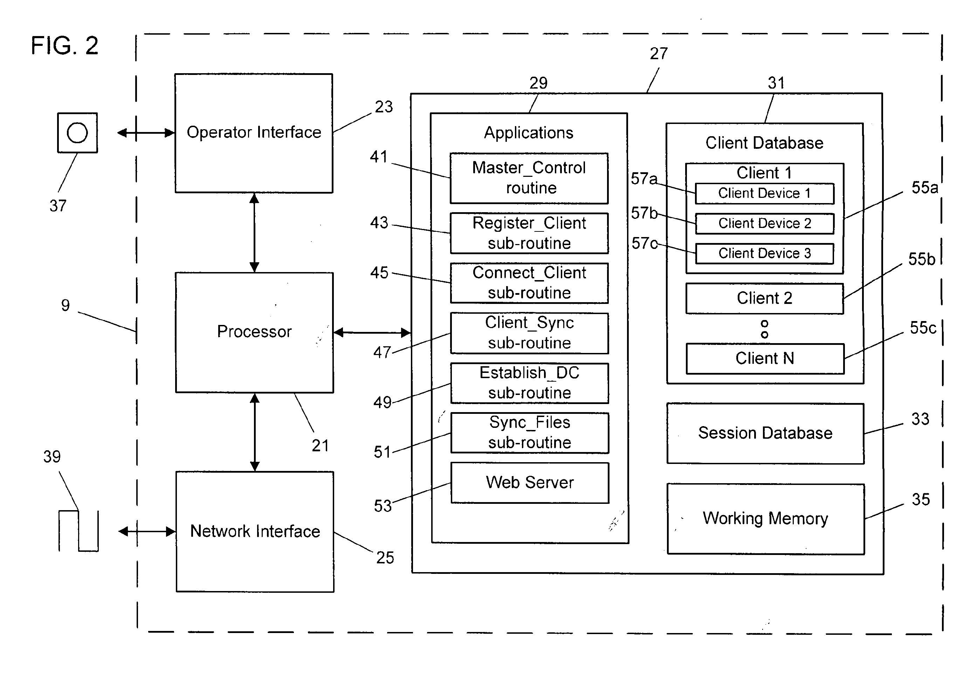

The main components of the gateway 9 will now be described with reference to Figure 2. As shown, the gateway 9 includes a processor 21, an operator interface 23, a network interface 25 and memory 27.

The operator interface 23 includes a keyboard (not shown) and a display (not shown) enabling an operator to interact directly with the gateway 9. The operator interface 23 also includes a CD-ROM drive (not shown) which allows data or programs to be written onto, or read from, a CD-ROM 37.

The network interface 25 allows data to be sent to, or received from, a remote networked device in the form of network signals 39.

The memory 27 includes a first memory region 29 storing applications which are run by the processor 21, a second memory region 31 storing a client database, a third memory region 33 storing a session database and a fourth memory region 35 providing working memory. It will be appreciated that this is a schematic representation and the memory regions need not consist of contiguous memory addresses. Further, it will be appreciated that the memory 27 may consist of plural memory devices each having different operational properties.

In this embodiment, the first memory region 29 stores a Master_Control routine 41 which is able to execute the following sub-routines either directly or indirectly through one of the other sub-routines:
- a Register_Client sub-routine 43;
- a Connect_Client sub-routine 45;
- a Client_Sync sub-routine 47;
- an Establish_DC sub-routine 49; and
- a Sync_Files sub-routine 51.

The first memory region also stores a web server 53.

The client database 31 has a data region 55a,55b,55c for each of a plurality of clients. The data region 55a,55b,55c for each client includes a list of client devices 57a,57b,57c associated with each client. Figure 2 shows an example of such a list in which a client had three client devices 57a,57b,57c, but a client may have any number of registered client devices.

The session database 33 stores details of ongoing communication sessions with client devices.

### DESKTOP COMPUTER/LAPTOP COMPUTER

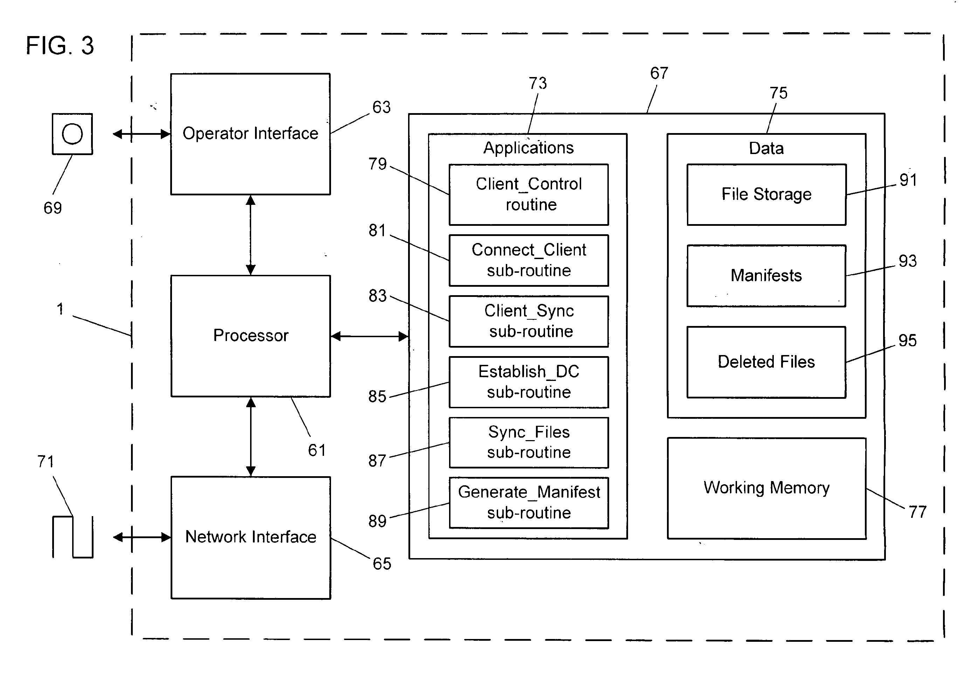

Figure 3 schematically shows the main components of the desktop computer 1. As shown, the desktop computer 1 includes a processor 61, an operator interface 63, a network interface 65 and memory 67.

The operator interface 63 includes a keyboard (not shown) and a display (not shown) enabling an operator to interact directly with the desktop computer 1. The operator interface 63 also includes a CD-ROM drive (not shown) which allows data or programs to be written onto, or read from, a CD-ROM 69.

The network interface 65 allows data to be sent to, or received from, a remote networked device in the form of network signals 71.

The memory 67 includes a first memory region 73 storing applications which are run by the processor 61, a second memory region 75 storing data, and a third memory region 77 providing working memory. It will be appreciated that this is a schematic representation and the memory regions need not consist of contiguous memory addresses. Further, it will be appreciated that the memory 75 may consist of plural memory devices each having different operational properties.

It will be appreciated that the features of the desktop computer 1 described so far are conventional features present in any desktop computer. The novelty resides in client application software stored in the memory 67. In particular, in this embodiment the first memory region 73 stores a novel Client_Control routine 79 which is able to execute the following novel sub-routines either directly or indirectly through one of the other sub-routines:
- a Connect_Client sub-routine 81;
- a Client_Sync sub-routine 83;
- an Establish_DC sub-routine 85;
- a Sync_Files sub-routine 87 ; and
- a Generate_Manifest sub-routine 89.

In addition, the data memory region 75 stores novel data in a file storage region 91, which stores files for which synchronisation operations are to be performed, a manifests region 93, which stores manifests indicating at various points in time the files stored in the file storage region 91, and a deleted files region 95 which stores a list of deleted files.

The file storage region 91 is formatted as a plurality of "Sync Centres" using an ASCII based file system, with each Sync Centre being a sub-folder storing certain types of content. For example, the Sync Centre "MUSIC" is used to map the different music storage folders on the different client devices so that all music files are stored correctly in the appropriate location for the current device. In this embodiment, there are four default Sync Centres, namely:
● DOCUMENTS contains document files
● MUSIC contains music files
● VIDEO contains video files
● PICTURES contains photo and image files

In addition, the file storage region 91 may include one or more custom Sync Centres. In this embodiment, the file storage region 91 includes a custom Sync Centre CONTENT which contains files downloaded from the content provider server 11.

In this embodiment, each of the manifests stored in the manifests region 93 contains at least the following:

| | | |
|---|---|---|
| <version> | | The version of the file manifest |
| <transferfiles> | | Files that are for transfer to remote device |
| <file> | | |
| | <synccentre> | The Sync Centre containing the file |
| | <subfolder> | Any subfolder details for the current file |
| | <name> | URL Encoded file name |
| | <size> | Overall file size in bytes |
| | <date> | Last modified date/time |
| | <md5> | The MD5 checksum of the complete file |

Those skilled in the art will recognise that the MD5 checksum is a one-way hash of the file.

In this embodiment, the manifest is stored in XML format. An exemplary manifest is set out below:

```
 < ?xml version="1.0" encoding="ISO-8859-1"?>
 <ZOMFFileManifest>
   <version>1.8</version>
   <transferfiles>
      <file>
        <synccentre>VIDEO</synccentre><subfolder>Family%2FZipped</subfo
        Ider><name>clipl.zip</name><size>7801956</size><date>17/02/2008
        14:22:52</date><md5>b8094d61a99f88824d40016ce8603672</md5>
      </file>
      <file>
        <synccentre>VIDEO</synccentre><subfolder></subfolder>
        <name>clip2.wmw</name><size>7845709</size><date>03/12/2007
        03:09:01</date><md5>11a7198d46d04917e6eba4e19deb3006</md5>
      </file>
   </transferfiles>
 </ZOMFFileManifest>
```

It will be appreciated that the data stored in the manifest relating to the files can be determined from the ASCII-based file system and the raw file data. Accordingly, all manner of file types (e.g. word processor files, image files, sound files and video files) can be handled.

The main components of the laptop computer 3 which are related to the invention are the same as those of the desktop computer 1 as described above, and therefore will not be described in detail.

### CELLULAR PHONE

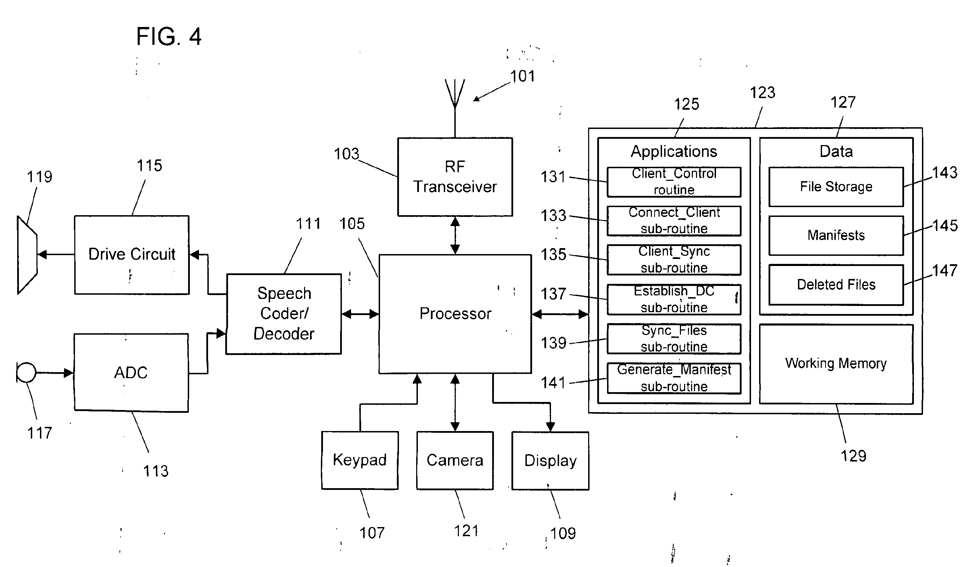

Figure 4 schematically shows the main components of the cellular phone 5. As shown, the cellular phone 5 has an aerial 101 which is connected to an RF transceiver 103. Signals received via the aerial 101 are processed by the RF transceiver 103 to recover message data, and the message data is output from the RF transceiver 103 for processing by a processor 105.

The cellular phone 5 also includes a microphone 117 and a loudspeaker 119 which are both connected to the processor 105 via a speech coder/decoder 111. In particular, acoustic signals detected by the microphone 117 are converted into digital data by an analog-to-digital converter (ADC) 113, the digital data is encoded by the speech coder/decoder 111 and the encoded data are output for processing by the processor 105. Encoded data output by the processor 105 is decoded by the speech coder/decoder 111, and the resultant decoded data is input to drive circuitry 115 for the loudspeaker 119.

The cellular phone 5 also has a keyboard 107 and a display 109 which are connected to the processor 105. The keyboard 107 receives user input, and the display 109 displays information to the user. The cellular phone 5 also has a camera 121 for capturing image data.

The cellular phone 5 also has memory 123, which in practice may consist of two or more memory devices having different properties. The memory 123 includes a first memory region 125 storing applications which are executed by the cellular phone 5, a second memory region 127 storing data, and a third memory region 129 providing working memory.

It will be appreciated that the features of the cellular phone 1 discussed so far with relation to Figure 4 are schematically representative of conventional features of many cellular phones. According to the present invention, the cellular phone 5 also includes a novel software agent including a Client_Control routine 131 which is able to execute the following novel sub-routines, either directly or indirectly via one of the other sub-routines:
- a Connect_Client sub-routine 133;
- a Client_Sync sub-routine 135;
- an Establish_DC sub-routine 137;
- a Sync_Files sub-routine 139; and
- a Generate_Manifest sub-routine 141.

In addition, in the same manner as for the desktop computer 1, the data memory region 127 stores novel data in a file storage region 143, which stores files for which synchronisation operations are to be performed, a manifests region 145, which stores manifests indicating at various points in time the files stored in the file storage region 143, and a deleted files region 147 which stores a list of deleted files.

The file storage region 143 is formatted as a plurality of "Sync Centres" in the same manner as the desktop computer 1. Further, the manifests region 145 stores manifests in the same manner as the desktop computer 1.

### THE CONTENT SERVER

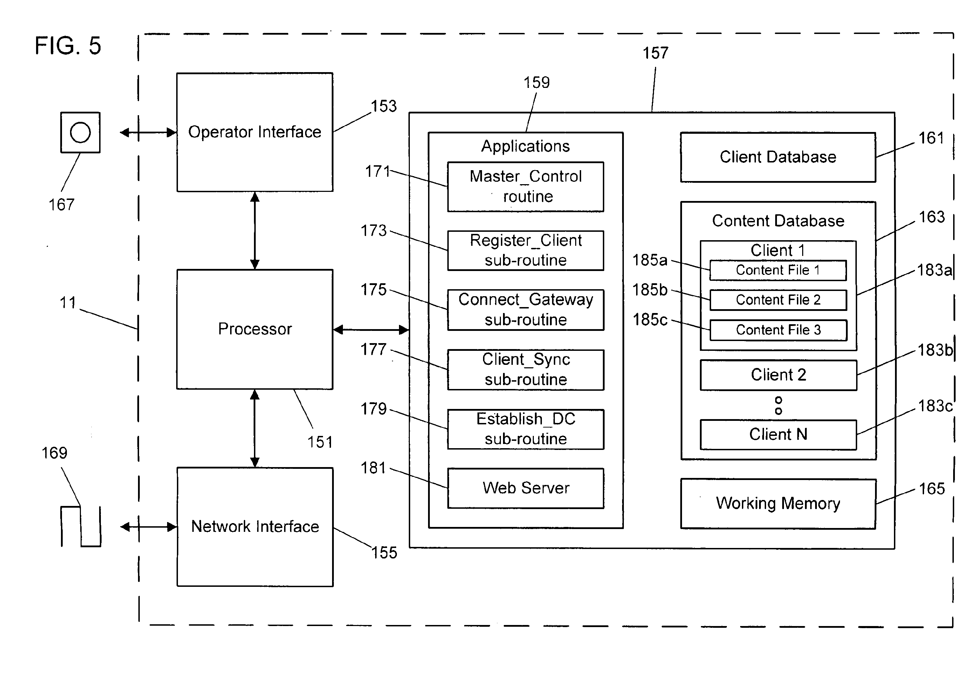

The main components of the content provider server 11 will now be described with reference to Figure 5. As shown, the content provider server 11 includes a processor 151, an operator interface 153, a network interface 155 and memory 157.

The operator interface 153 includes a keyboard (not shown) and a display (not shown) enabling an operator to interact directly with the content provider server 11. The operator interface 153 also includes a CD-ROM drive (not shown) which allows data or programs to be written onto, or read from, a CD-ROM 167.

The network interface 155 allows data to be sent to, or received from, a remote networked device in the form of network signals 169.

The memory 157 includes a first memory region 159 storing applications which are run by the processor 151, a second memory region 161 storing a client database, a third memory region 163 storing a content database and a fourth memory region 165 providing working memory. It will be appreciated that this is a schematic representation and the memory regions need not consist of contiguous memory addresses. Further, it will be appreciated that the memory 157 may consist of plural memory devices each having different operational properties.

In this embodiment, the first memory region 159 stores a Master_Control routine 171 which is able to execute the following sub-routines either directly or indirectly through one of the other sub-routtines:
- a Register_Client sub-routine 173;
- a Connect_Gateway sub-routine 175;
- a Client_Sync sub-routine 177; and
- an Establish_DC sub-routine 179.

The first memory region also stores a web server 181.

The client database 161 stores username and password information for each of a plurality of clients. The content database 163 has memory regions associated with each client, each storing one or more files for distribution to the associated client.

### SIGNALLING PROTOCOLS

In this embodiment, the system consists of two routing layers superimposed on one physical TCP/IP stream. This TCP/IP stream can be encrypted, clear, tunnelled, used over a VPN or direct point-to-point. Each layer has a distinct protocol, which is common insofar as they share the same packet structure for simplicity of coding. In this embodiment, the protocols for managing the two routing layers are referred to as the Gateway Transport Protocol (GTP) and the Client Media Transport Protocol (CMTP).

The Gateway Transport Protocol is used by each client device to connect to the gateway 9 in order to allow the setting up of client-to-gateway and transparent client-to-client communication links using the gateway 9 as a proxy once a session has been established. The Client Media Transport Protocol is a client-to-client protocol that is only used once the GTP layer has indicated that for a client device for which a session has already been established, another client device is available with which to communicate.

The structure of the packets communicated over the TCP/IP stream consists of a Header, Length, Protocol Discriminator, Message Type, Data Payload and Integrity Checksum as follows:

| Header | | Payload Length | Protocol Discriminator | Message Type | Data Payload | Integrity Check |
|---|---|---|---|---|---|---|
| 0x40 | 0x40 | 16 bits | 8 bits | 8 bits | Dependent on Message Type | 16 bits |

The protocol discriminator indicates if the protocol encapsulated in the packet is GTP (0x00) or CMTP (0x01). The message type indicates which protocol message is being sent and the format of the data payload is defined by the message type. The routing of each message within the gateway is determined by the protocol discriminator. For example, a GTP protocol discriminator routes messages between a client device and the gateway, whereas a CMTP protocol discriminator routes messages between two client devices.

### OPERATIONAL PROCESSES

The main operational processes performed by the file storage synchronisation system of Figure 1 will now be described.

### Client Registration

In order to set up a client account or to add a client device to an existing client account, a user uses a web browser to access the web server 53 of the gateway 9. If the user wishes to set up a client account, then the user navigates to a registration web page provided by the web server 53 and enters identification details including a username and a password which allow the user to login into the account following set-up. In response to receipt of the identification details of the client, the Master_Control routine 41 in the gateway 9 initiates the Register_Client sub-routine 43, which sets up a client account for the client in the client database 31.

To add a client device to an existing client account, using the web interface provided by the web server 53, the user logs into the appropriate client account and selects a register client device option. When adding a computer as a client device, the user provides details of the operating system of the computer and enters a name for the computer (e.g. "home computer" or "work computer"). The gateway 9 then provides a link for transferring appropriate client application software to the computer which, when executed, installs the client software in the computer and sets up the file directories for the Sync Centres.

When adding a cellular phone as a client device, the user enters a name for the cellular phone (e.g. "personal mobile" or "work mobile") and the telephone number for the cellular phone. In response to receiving the data about the cellular phone, the Master_Control routine 41 initiates the Register_Client sub-routine 43 which causes an SMS message to be sent to the entered telephone number. This SMS message includes a link to a webpage from which the client application software can be downloaded. Following downloading and execution of the client application software by the cellular phone, the Register_Client sub-routine 43 completes an entry for the cellular phone in the client data in the client database 31 for that client.

### Client Connection

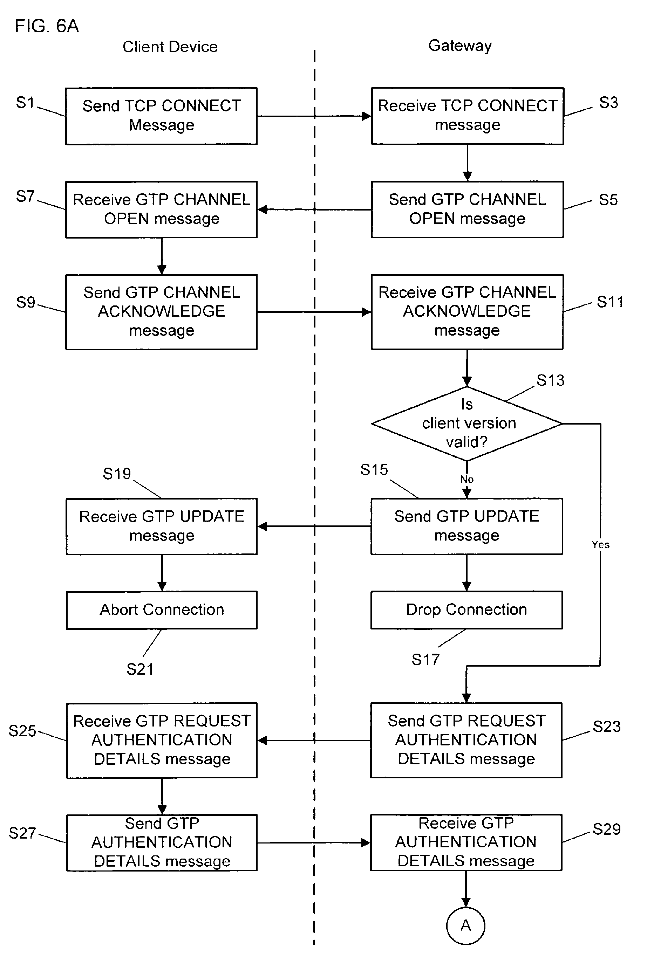

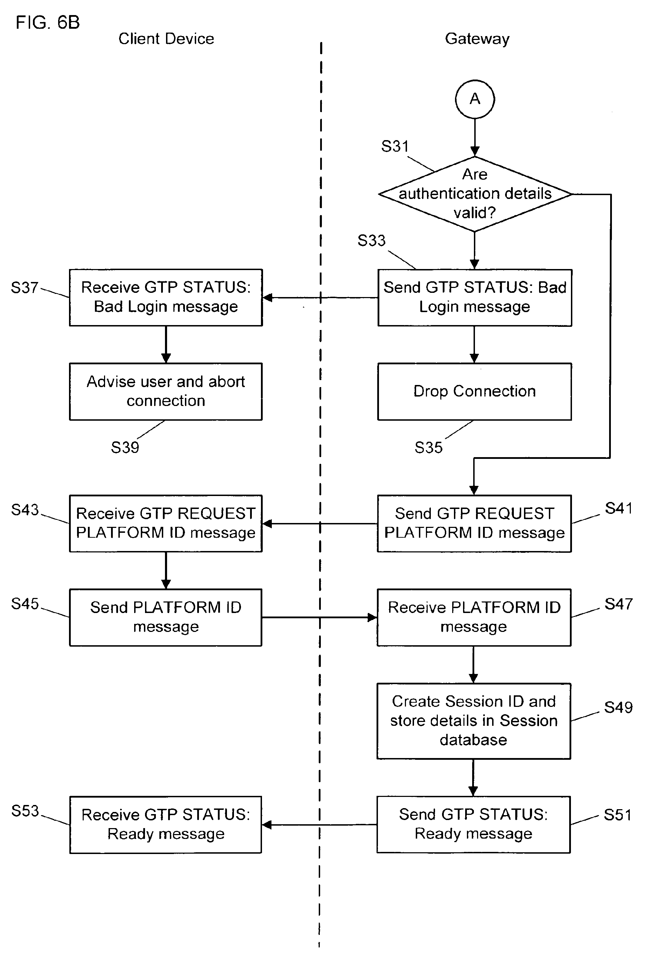

The steps performed when a client device connects to the gateway 9 will now be described with reference to Figure 6. For a client device which is a computer, such as the desktop computer 1 and the laptop computer 3, such a connection takes place whenever the client device is switched on and is maintained until the client device is switched off. For a client device which is a cellular phone, e.g. cellular phone 5 in Figure 1, in this embodiment a connection is made whenever the cellular phone 1 is switched on but, following any synchronisation processes being performed, the connection is suspended and only intermittently is the connection re-established in order to preserve the battery life of the cellular phone 1.

As shown in Figure 6, the client device sends, at S1, a TCP CONNECT call to the gateway 9 to establish a connection. Following receipt, at S3, and processing of the TCP CONNECT call, the Master_Control routine 41 in the gateway 9 initiates the Connect_Client sub-routine 45 which controls the operations performed by the gateway 9 during the connection process. The gateway 9 sends, at S5, a GTP CHANNEL OPEN message to the client device. The GTP CHANNEL OPEN message informs the client of the type of channel available, ciphering capabilities and key requirements. Following receipt, at S7, of the GTP CHANNEL OPEN message, the client device sends a GTP CHANNEL ACKNOWLEDGE message to the gateway 9. The GTP CHANNEL ACKNOWLEDGE message confirms channel configuration details and provides details of the version of the protocol which the client device can handle.

Following receipt, at S11, of the GTP CHANNEL ACKNOWLEDGE message, the gateway 9 checks, at S 13, if the protocol version supported by the client device is still valid. If the client version is not valid, then the gateway 9 sends, at S 15, to the client device a GTP UPDATE message providing details of where an updated protocol version can be downloaded, and then the gateway 9 drops, at S 17, the connection. Following receipt, at S 19, of the GTP UPDATE message, the client device informs the user of where the updated protocol version can be downloaded than aborts, at S21, the connection.

If the protocol version supported by the client device is valid, then the gateway 9 sends, at S23, a GTP REQUEST AUTHENTICATION DETAILS message to the client device. In response to receipt, at S25, of the GTP REQUEST AUTHENTICATION DETAILS message, the client device sends, at S27, a GTP AUTHENTICATION DETAILS message which conveys the username and password for that client. Following receipt, at S29, of the GTP AUTHENTICATION DETAILS message, the gateway 9 checks, at S31, that the username and password matches those previously provided during the registration process and are therefore deemed valid. If the authentication details are not deemed valid, then the gateway 9 sends, at S33, a GTP STATUS message indicating bad login details to the client device, and then drops, at S35, the connection. On receipt, at S37, of the GTP STATUS message indicating bad login details, the client device informs, at S39, the user and aborts the connection.

If the authentication details are valid, the gateway 9 sends, at S41, a GTP REQUEST PLATFORM ID message to the client device. Following receipt, at S43, of the GTP REQUEST PLATFORM ID message, the client device sends, at S45, a PLATFORM ID message to the gateway 9. The PLATFORM ID message specifies a Platform ID for the client device and details of the local connection. In this embodiment, the platform ID for a PC is a system fingerprint hash whereas for a cellular phone the platform ID is the IMEI. The details of the local connection include the IP address of the local connection , the subnet mask for the local connection and the gateway for the local connection.

Following receipt, at S47, of the PLATFORM ID message, the gateway 9 creates, at S49, a Session ID and stores details of the session in the sessions database 33. The gateway 9 then sends, at S51, a GTP STATUS message indicating that the gateway 9 is ready for further operations, and the GTP STATUS message is received by the client device at S53.

### File Synchronisation

When a single user has multiple client devices connected to the gateway 9, then a file synchronisation operation can take place. During synchronisation, each client device requests a list of all the other currently connected client devices for the same user from the gateway 9, and then sequentially checks each of the other client devices to see if any files on the other client devices need to be downloaded. To prevent multiple client devices from synchronising simultaneously, synchronisation may only be performed with the explicit authority of the gateway 9, and the gateway 9 only authorises one client device at a time to initiate file synchronisation.

In this embodiment, the gateway 9 prioritises any connected cellular phones for authority to perform synchronisation. Accordingly, when a cellular phone is connected to the gateway 9, then the gateway 9 will seek to synchronise the cellular phone 1 with the primary client device as soon as possible in order to minimise the time during which the cellular phone 1 needs to be connected to the gateway 9, thereby preserving the battery life of the cellular phone. Ideally, the primary client device is always connected to the gateway, and therefore the gateway authorises the cellular phone 9 to perform synchronisation with the primary client device and then authorises the primary client device to perform synchronisation with the cellular phone.

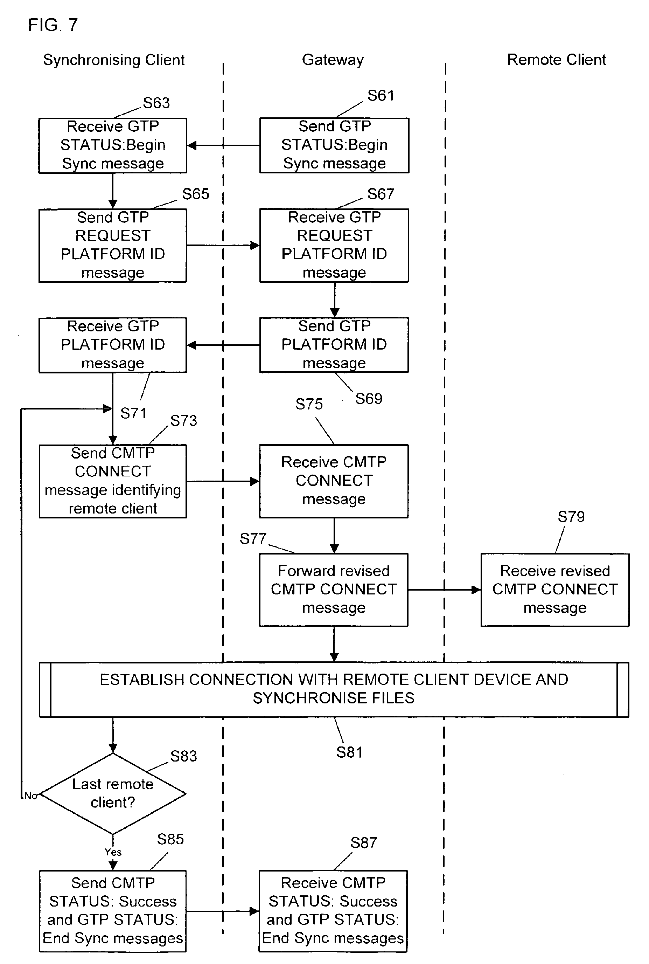

The steps performed once the gateway 9 has decided which client device of a user is to be given permission to perform synchronisation (hereafter called the synchronising client device) are set out in Figure 7. As shown, initially the gateway 9 sends, at S61, a GTP STATUS message to the synchronising client device indicating that it is authorised to perform synchronisation operations. Following receipt, at S63, of the GTP STATUS message indicating authorisation to synchronise, the synchronising client device initiates the Client_Sync sub-routine. The client device sends, at S65, a GTP REQUEST PLATFORM ID message to the gateway 9. Following receipt, at S67, of the GTP REQUEST PLATFORM ID message, the gateway 9 sends, at S69, a GTP PLATFORM ID message providing platform ID and local connection details of a list of other connected client devices for the user of the synchronising client device. For each connected client device on the list, the GTP PLATFORM ID message specifies details of the type of ID being provided, including whether or not the device is the primary client device.

Following receipt, at S71, of the GTP PLATFORM ID message, the synchronising client determines which client device to synchronise with first and sends, at S73, to the Gateway 9 a CMTP CONNECT message conveying the Platform ID data for the first client device. Normally, the primary client device will be synchronised with first as it is likely to be most advanced in synchronisation with the other client devices. The client device which the synchronising client device is connecting to is hereafter called the remote client device. Following receipt, at S75, of the CMTP CONNECT message, the gateway 9 replaces the Platform ID of the remote client device with that of the synchronising client device, and forwards, at S77, the revised CMTP CONNECT message to the remote client device, which receives the CMTP CONNECT message at S79.

The gateway 9 then controls, at S81, the establishment of a connection between the synchronising client device and the remote client device and file synchronisation occurs. Following completion of file synchronisation, the synchronising client checks, at S83, if there are any remaining Platform IDs remaining in the list provided in the GTP PLATFORM ID message from the gateway 9. If there are, then the synchronising client device sets the next client device on the list as the remote client device and the connection establishment and file synchronisation process is repeated. Otherwise, the synchronising client device sends, at S85, a CMTP STATUS message to the gateway 9 indicating that the synchronisation was a success, followed by a GTP STATUS message to the gateway 9 indicating that the synchronisation process has been completed, and the gateway 9 receives the CMTP STATUS message and the GTP STATUS message at S87.

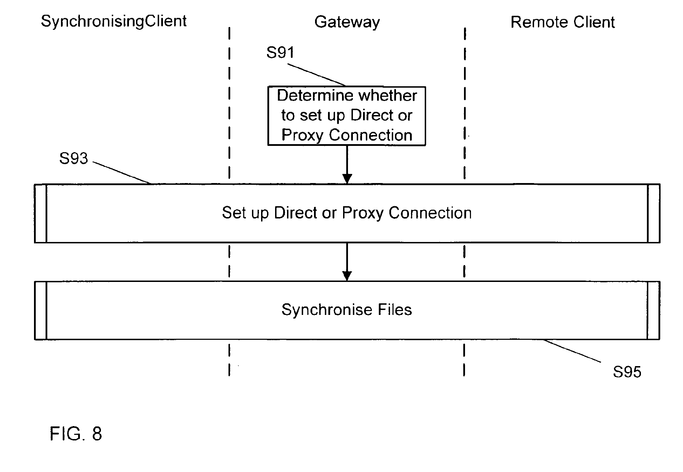

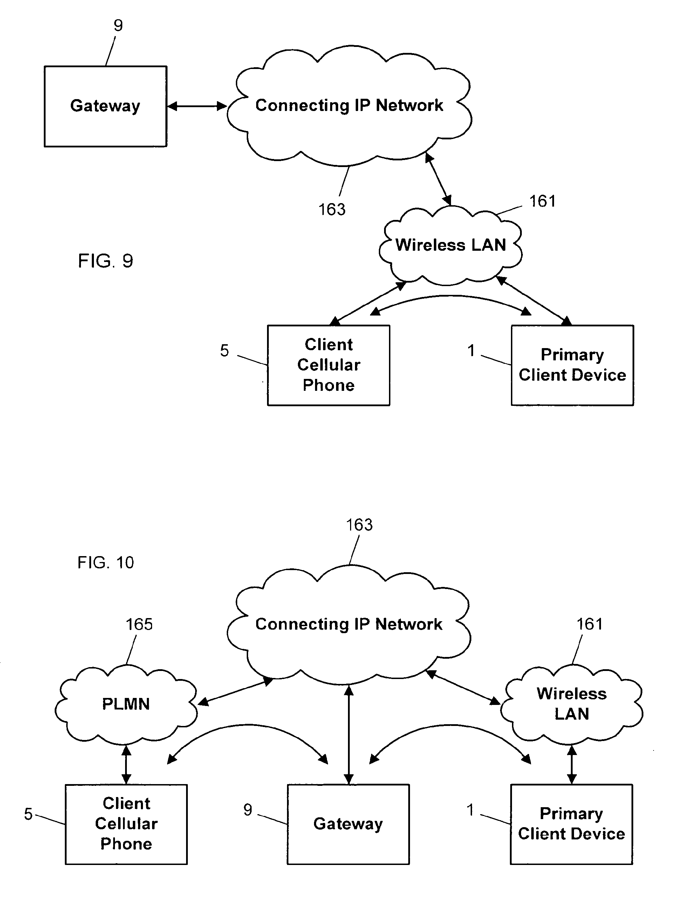

Figure 8 gives an overview of the steps performed to establish a connection between the synchronising client device and the remote client device. Firstly, the gateway 9 determines, at S91, whether to set up a direct connection or a proxy connection. For a direct connection, as shown in Figure 9 for an example in which a client cellular phone 5 is a synchronising client device and the primary client device 1 is the remote client device, a request by the synchronising client device for a manifest or a file is sent directly to the remote client device, and similarly the requested manifest or file itself is sent directly from the remote client device to the synchronising client device. In contrast, for a proxy connection, as shown in Figure 10, a request by the synchronising client device for a manifest or file is sent to the gateway 9, which acts as a proxy and forwards the received request to the remote client device and similarly the requested manifest or file is sent from the remote client device to the synchronising client device via the gateway 9.

If possible, a direct connection is set up because a direct connection generally results in a faster data transfer than a proxy connection. Figure 9 illustrates one situation where establishing a direct connection may be very advantageous. In Figure 9, both the primary client device 1 and the client cellular phone 5 are connected to the same wireless LAN 161, and the wireless LAN 161 is connected to the gateway 9 via a connecting IP network 163. In this situation, to communicate directly between the client cellular phone 5 and the primary client device 1, data is only sent over the wireless LAN. Such a situation may occur when the primary client device is a home computer, the client cellular device is WiFi-enabled and the user has a wireless LAN set up at their home.

Figure 10 illustrates a situation in which it may not be possible to set up a direct connection. As in Figure 9, the primary client device 1 is connected to a wireless LAN 161, which is in turn connected to the gateway 9 via a connecting IP network 163. However, the client cellular phone 5 is connected to a PLMN 165, which is connected to the gateway 9 via the connecting IP network. For example, the client cellular phone 5 may be connected to the PLMN 165 via a GPRS or 3G connection.

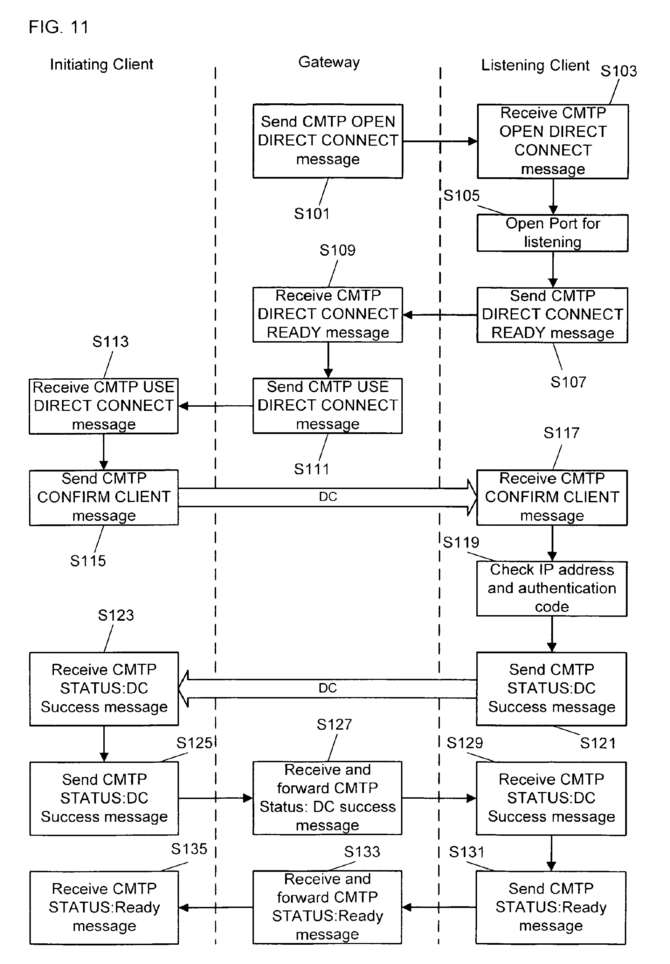

Figure 11 illustrates the manner in which a direct connection between client devices is established. The gateway 9 initiates the Establish_DC sub-routine 85, which assigns one of the client devices as the 'initiating client' and the other of the client devices as the 'listening client'. The synchronising client may be either the initiating client or the listening client. In this embodiment, if one of the client devices is a cellular phone then this client device will be assigned the initiating client.

As shown in Figure 11, after determining which client device is to be the listening client, the gateway 9 sends, at S101, a CMTP OPEN DIRECT CONNECT message to the listening client. The CMTP OPEN DIRECT CONNECT message indicates the IP address of the initiating client, a range of possible IP port numbers for establishing the direct connection, and an authentication code which is randomly assigned to the direct connection. The CMTP OPEN DIRECT CONNECT message also indicates whether the listening device needs to open a UPnP port from the local router.

Following receipt, at S103, of the OPEN DIRECT CONNECT message, the listening client initiates the Establish_DC sub-routine 85 or 137 which opens, at S105, an IP port within the specified range of possible port numbers and sends, at S107, a CMTP DIRECT CONNECT READY message to the gateway device 9. The CMTP DIRECT CONNECT READY message indicates the port number of the port which has been opened by the listening device. After receiving, at S109, the CMTP DIRECT CONNECT READY message, the gateway device 9 sends, at S111, a CMTP USE DIRECT CONNECT message to the initiating client. The CMTP USE DIRECT CONNECT message specifies the IP address for the listening client, the port number provided by the listening client and the authentication code assigned to the direct connection.

Following receipt, at S113, of the CMTP RECEIVE DIRECT CONNECT message, the initiating client initiates the Establish_DC sub-routine 85 or 137 and sends, at S115, a CMTP CONFIRM CLIENT message directly (i.e. not via the gateway device) to specified port number at the IP address of the listening client. The CMTP CONFIRM CLIENT message specifies the authentication code assigned to the direct connection, and following receipt, at S117, of the CMTP CONFIRM CLIENT message, the listening client checks, at S119, that the IP address of the initiating client and the authentication code matches those provided by the gateway device in the CMTP OPEN DIRECT message. If the result of the check is positive, the listening client sends, at S 121, a CMTP STATUS message directly to the initiating device indicating that the direct connection was successful.

Following receipt, at S 123, of the CMTP STATUS message indicating that the direct connection was successful, the initiating client forwards, at S125, the CMTP STATUS message indicating that the direct connection was successful to the gateway device 9, which forwards, at S127, the CMTP STATUS message indicating that the direct connection was successful to the listening client.

Following receipt, at S129, of the CMTP STATUS message indicating that the connection was successful, the listening client sends, at S 131, a CMTP STATUS message to the gateway device 9 indicating that the listening device was ready. The gateway device forwards, at S133, the CMTP STATUS message indicating that the connection was successful to the initiating device, which receives the CMTP STATUS message indicating that the connection was successful at S135. A direct connection between the initiating device and the listening device is then established.

In this embodiment, if any problem should occur during or following the establishment of a direct connection, then the gateway device sends a CMTP USE PROXY CONNECT message to both clients which instructs the clients to proceed using a proxy connection in which data is sent to the gateway device 9 which in turn forwards the data to the other client device.

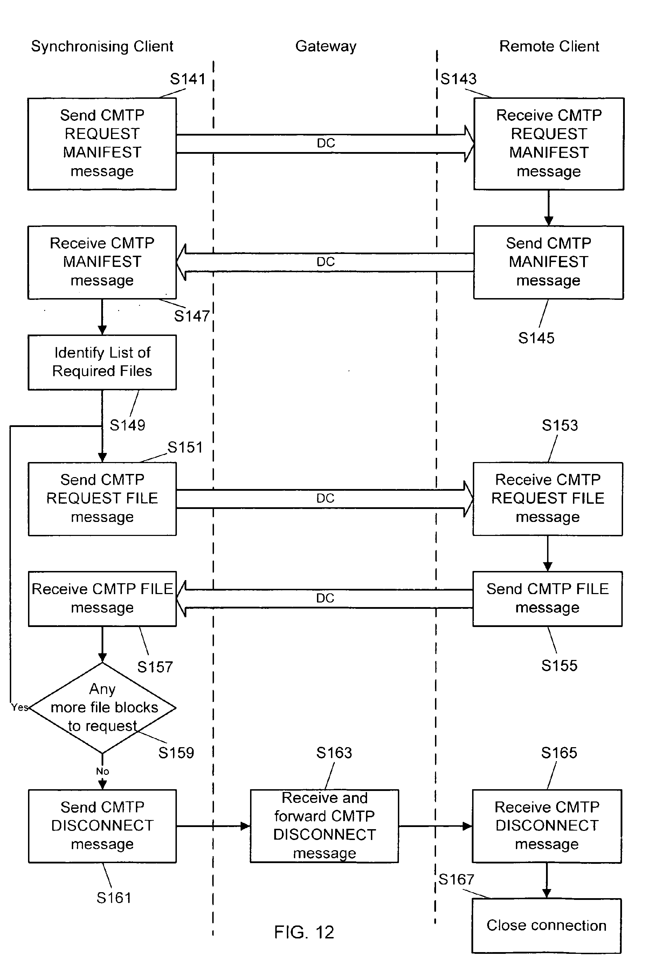

Figure 12 shows the file synchronisation process using the direct connection. Firstly, the synchronising client sends, at S141, a CMTP REQUEST MANIFEST message directly to the remote client using the direct connection. Following receipt, at S 143, of the CMTP REQUEST MANIFEST message, the remote client sends, at S145, a CMTP MANIFEST message directly to the synchronising client over the direct connection. The CMTP MANIFEST message conveys the manifest of the files stored in the Sync Centres of the remote client to the synchronising client. In this embodiment, the manifest files can be large and therefore are sent in parts as a sequence of CMTP MANIFEST messages. Each CMTP MANIFEST message specifies the total number of parts and the part number for that CMTP MANIFEST message, along with the manifest data.

Following receipt, at S147, of the CMTP MANIFEST messages, the synchronising client reconstructs the file manifest of the remote client and then identifies, at S149, files to be transferred from the remote client. This involves comparing the file manifest of the of the remote client with the files stored in the Sync Centres of the synchronising client.

Firstly, files which appear in the manifest of the remote device but do not appear in the Sync Centres of the synchronising client are identified and checked against the deleted files list stored in the deleted files memory region 95. Any of the identified files which appear in the list of deleted files are not to be transferred, while the synchronising client marks the remaining files for transfer from the remote client.

Secondly, if a file identified in the manifest from the remote client appears in one of the Sync Centres of the synchronising client, then the synchronising client determines which of the file versions is most recent. In order to do this, in this embodiment a mechanism is involved in which the time offset between the remote client and the gateway device 9 provided in the file manifest of the remote client is used to take account for any differences in time zones or inaccuracy of clocks between the synchronising client and the remote client. This time offset is calculated periodically by the Client_Control routine in the client device sending a GTP GENERAL ACTION message indicating a time sync request and including the current time at the client device to the gateway device 9. The gateway device 9 calculates the difference between the receipt time of the GTP GENERAL ACTION message indicating a time sync request and the time provided in the GTP GENERAL ACTION message indicating a time sync request, hereafter called the uplink time difference, and sends the uplink time difference and the current time at the gateway device to the client device in a GTP GENERAL ACTION message indicating a time sync response. The client device then calculates the time difference between the time of receipt of the GTP GENERAL ACTION message indicating a time sync response and the time at the gateway device specified in the GTP GENERAL ACTION message indicating a time sync response, hereafter called the downlink time difference. The time offset is then determined by averaging the uplink time difference and the downlink time difference.

To allow for the fact that TCP message may be re-transmitted, the calculation is performed several times in close succession and then the calculated time offsets are compared statistically. Any time offset values falling further than the standard deviation from the mean time offset value are ignored, and then the time offset is calculated from the mean of the remaining time offset values.

To determine which file is most recent, the synchronising client adds the time offset value for the remote client to the modification time for the file and subtracts the time offset value for the synchronising client to give an adjusted time value which is then compared with the local file time. If the local file time is more than a predetermined period (e.g. in this embodiment three seconds) older than the adjusted time value, then it is deemed that the remote client stores a more recent version of the file and the file is marked for transfer from the remote client.

Having identified various files for transfer, the synchronising client now requests the identified files, i.e. the synchronising client 'pulls' the identified files from the remote client. In this way, the synchronising client only receives data which is needed for synchronisation, thereby reducing network traffic. In this embodiment, the synchronising client requests the files in blocks. As shown in Figure 12, the synchronising client sends, at S151, a CMTP REQUEST FILE message to the remote client over the direct connection. The CMTP REQUEST FILE message specifies the identity of the requested file and the block of the file requested. Following receipt, at S153, of the CMTP REQUEST FILE message, the remote client sends a CMTP FILE message providing the block of file data requested. Following receipt of the requested block of file data, the synchronising client checks, at S159, is any further file blocks are to be requested. If so, the synchronising client sends another CMTP REQUEST FILE message, otherwise, the synchronising client sends, at S161, a CMTP DISCONNECT message to the gateway device 9, which in turn forwards, at S163, the CMTP DISCONNECT message to the remote client.

Following receipt, at S 165, of the CMTP DISCONNECT message, the remote client closes, at S167, the connection.

### Content Distribution

The file storage synchronisation infrastructure described above can also be used to distribute content from a content provider to the client. For example, the content provider may provide regular video clips for the client. In an exemplary embodiment, a new video clip may be provided daily giving a news summary.

To receive content from the content provider, the client first registers with the content provider. This is done using an online registration process in which web pages are accessed by the client in a conventional manner from the web server 181. During the registration process, which is controlled by the Register_Client sub-routine 173, the client provides the username and password which allows the client to log onto the gateway device 9. The client also downloads from the content provider server a code segment which installs in the client device a custom Sync Centre associated with the content provider server.

Following client registration, the content provider server 11 is able to log onto the gateway device 9 using the Connect_Gateway sub-routine 175, providing a service username uniquely associated with that client provider server and the client username and password. The gateway device 9 then adds the content provider server 11 to the list of client devices along with a flag indicating that files may only be synchronised from the content provider server 11 but not synchronised to the content provider server 11. In other words, the content provider server 11 cannot be the synchronising client device.

In order to make a content file available for downloading by a client device, the content file is stored in the memory region 183 associated with that client. The client device is then able to download the content file when performing the actions of a synchronising client device as described above, the identity of the content provider server being included in the list of platform IDs.

It will be appreciated that particularly for mobile communication devices such as cellular phones, distributing files in this manner means that the files can be transferred to the mobile communication device before they are needed so there is no wait for them to be downloaded when they are needed.

### MODIFICATIONS AND FURTHER EMBODIMENTS

As is apparent from the discussion above, in this specification the term "file synchronisation" refers to an operation in which one client device obtains one or more files from another client device so that both client devices store the one or more files. It will be appreciated that this does not necessarily mean that each client device store exactly the same files. For example, in the described exemplary embodiment only files in certain folders are considered, and files which appear on a deleted files list are not synchronised.

As in normal usage, the term "battery-powered" refers to a client device which can be powered by a battery, which may or may not be rechargeable. A battery-powered device may also have the option of being powered by a mains power signal, for example most laptop computers will either run off a battery or a mains power supply. In an embodiment of such a battery-powered device, when the device is running off the battery the battery-life extending features described above may be utilised while when the device is running of a mains power supply the described battery-life extending features are disabled.

In the described embodiment, all file storage in the client devices utilises a conventional ASCII based file system. In such a file system, file structure data is stored providing details of the folders (sometimes referred to as directories) and sub-folders (sometimes referred to as sub-directories) along with details of the actual files stored such as file name, size and modification date. Further, an MD5 checksum for a file can be calculated purely on the basis of the raw file data and accordingly can be calculated regardless of the type of file stored. Accordingly, it will be appreciated that the file manifest is calculated using only the file structure data and the raw data.

In addition, the transfer of files is performed by splitting the raw data of the file into blocks. Accordingly, the file storage synchronisation system will work regardless of the type of file stored.

In order to save unnecessary transmission bandwidth due to the large amount of repeated data in a manifest file, it is possible to use compression technology (such as GZIP) when transmitting the manifest file. The compression is applied after creation of the manifest file but before transmission. Decompression occurs after transmission but before processing. Other possible optimisations are to store local copies of the manifest file with identification tags, and generating differential manifest files descended from a manifest file associated with a master identification tag.

Although in the described embodiments the MD5 algorithm has been used to form a one-way hash, it will be recognised that other hashing algorithms could be used, e.g. the Secure Hashing Algorithm (SHA). Further, while it is advantageous to include a one-way hash of a file in the file manifest to allow the file integrity to be checked, it is not essential.

It will be appreciated by those skilled in the art that the password transmitted over the network may be a secure hash of the password entered by the user in order to improve the security of the credentials of the user.

A file system other than an ASCII based file system could be used. For example, a Unicode based file system is equally possible with a simple declaration of UTF8 in place of ISO-9959-1 in the version field of the XML manifest.

In an alternative embodiment, the gateway device sends data to a synchronising client indicating a block size to be used when pulling files from a remote client device. This block size may be calculated by the gateway device based on a network link speed monitored by the gateway device.

It will be appreciated that some network devices have multiple possible ways of connecting to an internet. For example, a cellular phone may be able to connect using a GPRS connection or a WiFi connection. In an embodiment of the invention, the gateway device sends a message to a client device indicating which connection should be prioritised. For example, the gateway device may instruct a cellular phone to prioritise a WiFi connection to the internet.

In the exemplary embodiment, the client devices automatically log on to the gateway device. Optionally, the client devices may also log onto the gateway device in response to a user initiation.

In the described embodiment, a connection from a client device to the gateway device is always initiated by the client device. This is advantageous from the view of security, but is not essential and in an alternative embodiment the gateway device may be able to initiate a connection with a client device.

A software agent for a cellular phone which implements the invention can be created for any mobile operating system, for example the Windows Mobile and Symbian operating systems.

The embodiment described with reference to the drawings comprises a processing apparatus and involve processes performed in the processing apparatus. The invention also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

The carrier may be any entity or device capable of carrying the program. For example, the carrier may comprise a storage medium, such as a ROM, for example a CD-ROM or a semiconductor ROM, or a magnetic recording medium, for example a floppy disc or a hard disc, or an optical recording medium, a Digital Versatile Disc (DVD), a USB memory drive or memory stick, Compact Flash and SD cards. Further, the carrier may be a transmissible carrier such as an electronic or optical signal which may be conveyed via electrical or optical cable or by radio or other means.

The carrier may be an integrated circuit in which the program is embedded, the integrated circuit being adapted for performing, or for use in the performance of, the relevant processes.

Although the invention may be implemented by software, it will be appreciated that alternatively the invention could be implemented by hardware devices or a combination of hardware devices and software.

## Claims

1. A method of automatically transferring files to a first network device from a second network device, the method comprising:
the first network device logging onto a remote networked gateway device;
the second network device logging onto the networked gateway device;
the networked gateway device sending a network signal authorising the first network device to commence a file synchronisation;
the first network device sending a network signal to the second network device requesting details of files stored by the second network device;
the second network device sending a network signal to the first network device providing details of files stored by the second network device;
the first network device comparing the details of files stored by the second network device with details of files stored by the first network device, and selecting files for transferring from the second network device to the first network device;
the first network device requesting said selected files from the second network device; and
the second network device sending said selected files to the first network device.

2. A method according to claim 1, wherein the first and second network devices have a file structure represented by file structure data, the file structure comprising a plurality of predefined folders common to the first and second network devices, and wherein in response to receipt of the request for details of files stored by the second network device, the second network device sends details of files stored in said predefined common folders.

3. A method according to claim 2, further comprising generating the details of the files stored by the second network device from data associated with the file structure and raw file data.

4. A method according to claim 2 or 3, wherein said predefined common folders comprise a folder for storing image files and a folder for storing audio files.

5. A method according to any preceding claim, wherein the networked gateway device sends details to the first and second network devices for establishing a connection directly between the first and second network devices.

6. A method according to claim 5, wherein the networked gateway device sends data indicating an authentication code to each of first and second network devices, and the networked gateway device sends one of the first and second network devices the network address of the other of said first and second network devices,
wherein said one of the first and second network devices sends said authentication code to the other of said first and second devices, and
wherein a direct connection between the first and second network devices is established following receipt of said authentication code by said other of the first and second network devices.

7. A method according to claim 6, wherein the networked gateway device further sends data indicating a port number to each of the first and second network devices, wherein said one of the first and second network devices sends said authentication code to said port number at the network address for said other of the first and second network devices.

8. A method according to any preceding claim, wherein said requesting of said selected files by the first network device comprises the first network device sending a plurality of requests to the second network device, each of said plurality of requests requesting a respective block of the selected file data.

9. A method according to any preceding claim, wherein the first and second network devices send data for the gateway device to the gateway device in data packets having a first protocol discriminator and send data for the other of the first and second network devices to the gateway device in data packets having a second protocol discriminator, whereby the protocol discriminator provides routing information.

10. A method according to any preceding claim in which the first network device is associated with a subscriber to a content providing service and the second network device is associated with the content providing service, wherein the content providing service distributes content data to the subscriber by storing the content data in the second network device.

11. A method of operating a network device to perform the functions of the first network device as claimed in any preceding claim.

12. A method of operating a network device to perform the functions of the second network device as claimed in any of claims 1 to 10.

13. A method of operating a network device to perform the functions of gateway device as claimed in any of claims 1 to 10.

14. A network device for performing a method as claimed in any of claims 11 to 13.

15. A computer program storing processor-implementable instructions for programming a network device to perform a method as claimed in any of claims 11 to 13.
